# NEW EUROPEAN PATENT SPECIFICATION

(11) **EP 1 455 567 B2**
(45) Date of publication and mention of the opposition decision: **03.10.2018**
(45) Mention of the grant of the patent: 27.01.2010
(21) Application number: 02786807.4
(22) Date of filing: 27.11.2002
(51) Int. Cl.: A01G 25/00, B05B 12/00, G05D 11/13

(54) **ELECTRONIC PROPORTIONER USING CONTINUOUS METERING AND CORRECTION**
DAUERDOSIERUNG UND -KORREKTUR VERWENDENDE ELEKTRONISCHE DOSIERVORRICHTUNG
DOSEUR ELECTRONIQUE UTILISANT UN DOSAGE ET UNE CORRECTION CONTINUS

(30) Priority: 27.11.2001 US 333697 P
(43) Date of publication of application: 15.09.2004
(60) Divisional application: 06076914.8
(73) Proprietor: Graco Minnesota Inc., Minneapolis, MN 55413 (US)
(72) Inventor: PITTMAN, David, Brooklyn Park, MN 55443 (US); NGUYEN, Vu, Brooklyn Park, MN 55445 (US)
(74) Representative: Miller Sturt Kenyon
(86) International application number: PCT/US2002/038037
(87) International publication number: WO 2003/045130

(56) References cited:
- EP-B1- 0 045 536
- EP-B1- 0 630 810
- WO-A-01/64325
- DE-A1- 4 134 494
- DE-A1- 19 848 640
- GB-A- 1 245 097
- US-A- 3 908 862
- US-A- 4 026 439
- US-A- 4 358 054
- US-A- 4 494 676
- US-A- 4 545 396
- US-A- 4 865 226
- US-A- 4 895 303
- US-A- 4 917 304
- US-A- 5 135 174
- US-A- 5 507 412
- US-A- 5 605 252

## Description

### TECHNICAL FIELD

Related applications include US Application serial number 60/186405, filed March 2, 2000, PCT application serial number PCT/US01/069, filed March 2, 2001 and US Application serial number 60/333,697, filed November 27, 2001.

### BACKGROUND ART

Proportioners such as those shown and described in the above applications are sold in the market by the assignee of the instant invention under the trademark VALUEMIX®.

United States Patent No. 5,605,252, issued on 25th February 1997, describes a metering system for compressible fluids. A first fluid source, which contains a compressible fluid, feeds a first container through a conduit and an inlet valve, while a second fluid source, which contains an incompressible fluid, feeds a second container through a conduit and an inlet valve. Mechanically connected to the first and second containers are respective first and second hydraulic cylinders, which are hydraulically operated from a hydraulic unit via solenoids under the action of an initiator switch, which is operated by the user. In use, the first and second hydraulic cylinders are initially in their fully retracted position, so that their respective pistons operate respective limit switches. When the initiator switch is operated, outlet valves at the outlets of respective first and second containers are closed, while the inlet valves at the inlets of respective first and second containers are open. First and second fluids are then simultaneously fed into their respective containers 30, 34 until the pressure of the compressible fluid in container reaches a certain level, as sensed by pressure switch. At that point the inlet valves are closed and the outlet valves are opened. The hydraulic unit then drives the two hydraulic cylinders to dispense fluid into a container. This continues until the pistons in the hydraulic cylinders operate the limit switches. The pressure inside the first container is allowed to drop to a lower level as sensed by pressure switch, upon which the outlet valves are closed again, the inlet valves are opened and the pistons in the hydraulic cylinders are retracted until they reach the limit switches once again. That is the end of the first metering cycle. Further metering cycles then occur under the control of the user through initiator switch. The appropriate ratios of the two fluids are determined by appropriate determination of the volumes dispensed by the containers. This, in turn, is derived from the positioning of the limit switches for the first hydraulic cylinder and the positioning of the limit switches for the second hydraulic cylinder and from the pressure settings for the two pressure switches associated with the first container.

US 4,026,439 relates to an air pump. The air pump includes an air driving portion and a fluid-cavity portion, defined by the position of a fluid piston. A check valve controls the flow of fluid into an inlet, while a further check valve controls the flow of fluid out of an outlet.
Also provided is a displacement-transducer portion comprising an actuator, driven by the air portion, and associated proximity switches Two of these proximity switches indicate the extremes of travel of the actuator, while the proximity switch senses the passage of a number of indentations provided along the axial length of the actuator and allows the passage of these indentations to be counted.

### DISCLOSURE OF THE INVENTION

In the instant invention, each of a pair (or more) of air-operated reciprocating piston pumps (such as those sold by the assignee of the instant invention under the trademark KING™) is provided with a linear displacement transducer (LDT) which is capable of communicating a precise indication of the linear position of the air motor and pump rod. Also provided is a controllable valve connected to the output of each of the pumps.

Unlike the aforementioned VALUEMIX (which sequentially dispenses first one component and then the other of a plural component material), the controller of the instant invention dispenses both components (or all three if a three component material) simultaneously and maintains ratio at the end of each predetermined volume of material.

For example, if a material calls for a 2:1 (for components A and B) ratio, both valves will be open initially. The controller then looks at whichever side has hit its mark first (2 for the A side and one for the B side) and closes the valve on that side until the other side "catches up" and hits its mark.

Cavitation, air entrainment, compressibility, or poor inlet check performance all can result in a loss of correlation between pump travel and fluid dispensing. The following process according to the invention is meant to correct for these issues. First, the controller determines when the pump has changed over (this is predictable from previous cycles, or observable from the LDT reading). The controller will then close the fluid valve. This allows the pump to compress any gases and positively close the check valve. When the pump stalls, the fluid valve is reopened. The position of the pump at that point is the starting value for fluid dispensed on that stroke.

These and other objects and advantages of the invention will appear more fully from the following description made in conjunction with the accompanying drawings wherein like reference characters refer to the same or similar parts throughout the several views.

### BRIEF DESCRIPTION OF DRAWINGS

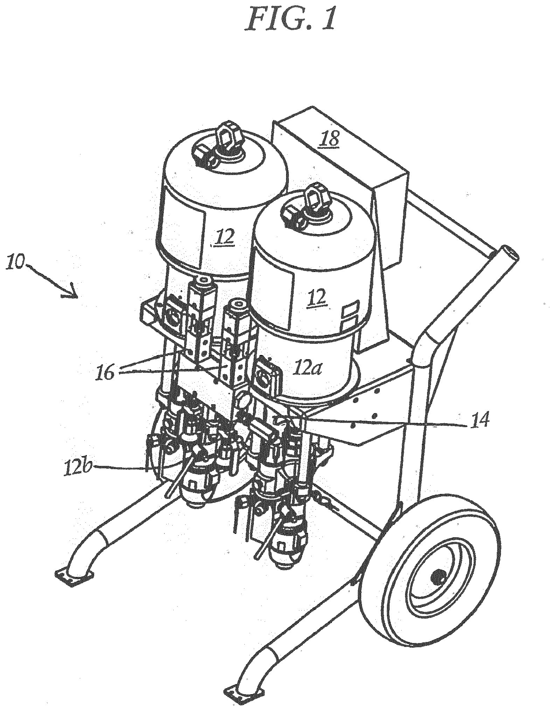

Figure 1 is a front perspective view of the instant invention.

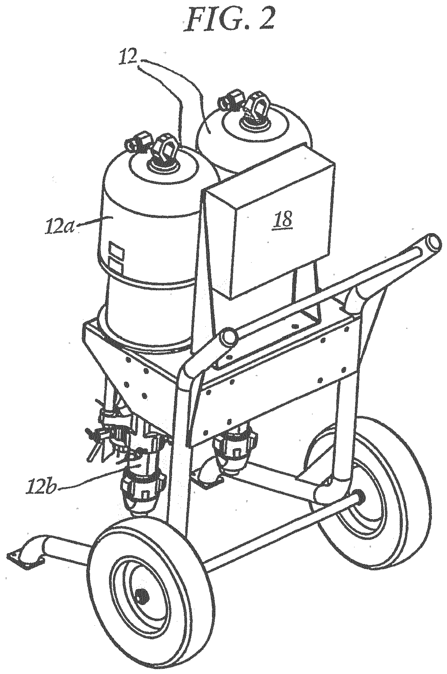

Figure 2 is a rear perspective view of the instant invention.

### BEST MODE FOR CARRYING OUT THE INVENTION

In the instant invention 10, each of a pair (or more) of air-operated reciprocating piston pumps 12 (such as those sold by the assignee of the instant invention under the trademark KING™) is provided with a linear displacement transducer (LDT) 14 which is capable of communicating (as discussed in the aforementioned applications) a precise indication of the linear position of the air motor 12a and pump rod 12b. Of course any reciprocating power source may be used to power the pump rod 12b. The LDT 14 provides an output in units of travel or resolution which may vary with the model used. In the preferred embodiment, the resolution may be in the range of ¼ to ½ inch. Also provided is a controllable valve 16 connected to the output of each of the pumps 12.

Unlike the aforementioned prior art VALUEMIX (which sequentially dispenses first one component and then the other of a plural component material), the controller of the instant invention dispenses both components (or all three if a three component material) simultaneously (at least initially) and maintains ratio at the end of each predetermined volume of material.

For example, if a material calls for a 2:1 (for components A and B) ratio, both valves will be open initially. The controller 18 then looks at whichever side has hit its mark first (2 units of travel for the A side and one for the B side) and closes the valve on that side until the other side "catches up" and hits its mark. Thus, the system truly controls both sides rather than letting one run and trying to match the other as commonly occurs.

Cavitation, air entertainment, compressibility, or poor inlet check performance all can result in a loss of correlation between pump travel and fluid dispensing. The following process is meant to correct for these issues. First, the controller determines when the pump has changed over. (This is predictable from previous cycles, or observable from the LDT reading) The controller will then close the fluid valve. This allows the pump to compress any gases and positively close the check valve. When the pump stalls, the fluid valve is reopened. The position of the pump at that point is starting value for fluid dispensed on that stroke.

The air pressure can be varied so as to effectively run both pumps simultaneously and continuously. Also, the control may be set to control flow rather than pressure. If desired and sufficient length is available, the hose may be used as an integrator to aid in mixing. In another alternative embodiment, the lower volume side or material may be run at a higher pressure and with a single dosing valve.

The interface is divided into three sections. The basic section are a run and a stop button. Under a cover are a display that shows ratio, and a cycle counter and a 4-position rotary switch for
- Run
- Test
- Independent Run A Pump
- Independent Run B Pump
- 5-digit 7-segment with decimal point to display ratio
- Lighted " Start" button (light while running) - momentary, non-latching
- Stop button - momentary, non-latching
- Ratio setting increments are 0.1, range is 0 to 10.
- Error code displayed in digital display (e.g. E:27).

### Following are operational modes:

Run (proportion): Open both fluid valves. Monitor travel of each pump. If one pump has traveled disproportionately ahead of the other pump, close its fluid valve. Monitor travel of the remaining pump. Once the trailing pump has caught up, open the other fluid valve. Repeat.

Within the run mode, and pump test mode the controller will compensate for physical problems associated with top change-over. Cavitation, air entertainment, compressibility, or poor inlet check performance all result in a loss of correlation between pump travel and fluid dispensing. The following algorithm is meant to correct for these issues.

Determine when the pump has changed over. (This is predictable from previous cycles, or observable from the LDT reading) Close the fluid valve. This allows the pump to compress any gases and positively close the check valve. When the pump stalls reopen the fluid valve. The position of the pump at that point is starting value for fluid dispensed on that stroke.

Independent run: Run any one (and only one) pump just like a normal pump. Fluid valve is constantly open throughout cycle. Do not repeat change-over in less than 500ms (Runaway control). Stop after 5 cycles.

Pump test: Run each pump through 3 full cycles plus extra distance necessary to compensate for top change-over error. (See Run Mode for description of change-over error compensation algorithm). Close the fluid valve once during the middle of each stroke and measure time delay until the pump stalls. This checks for a failed fluid valve, piston packings or check valve, or inlet valve failure.

Stop: Fluid valves and air valves closed.

Error: Special case of the stop mode. Fluid valves and recirculation valves closed. Error must be " acknowledged".

Calibration: Each LDT has a different offset and gain. The controller needs this data to work properly.

## Claims

1. A method for dispensing plural component materials having at least first and second parts to be mixed in a predetermined ratio, using an apparatus having first and second reciprocating pumps (12) connected to said first and second parts, each said pump having a displacement transducer (14) and a fluid valve (16) at the outlet of said pump, the method comprising the steps of:
predetermining the output of each said transducer (14), which corresponds with the resolution of said transducer (14) and said predetermined ratio;
running said first and second pumps with said fluid valves (16) open until one of said transducers (14) reaches said predetermined output; and
closing the fluid valve (16) associated with the pump which has reached said predetermined output and continuing to run the other of said pumps until it has reached said predetermined output; further comprising the steps of:
closing each said fluid valve (16) as the pump associated therewith reaches changeover to allow said pump to compress any gases and positively close a check valve associated with said pump;
when said pump stalls, opening the fluid valve (16); and
disregarding any travel and imputed flow during the portion of the cycle when said fluid valve (16) is closed.

## Patentansprüche

1. Verfahren zum Dosieren/Abgeben von mehreren Komponentenmaterialien aufweisend mindestens erste und zweite Anteile, die in einem vorher festgelegten Verhältnis gemischt werden sollen, unter Verwendung einer Vorrichtung aufweisend erste und zweite Kolbenpumpen (12), die mit den ersten und zweiten Anteilen verbunden sind, jede der Pumpen aufweisend einen Verschiebungswandler (14) und ein Flüssigkeitsventil (16) am Auslass der Pumpe, das Verfahren umfassend die Schritte:
Vorherbestimmen des Ausstoßes, welcher der Auflösung des Wandlers (14) und dem vorher festgelegten Verhältnis entspricht, jedes der Wandler (14);
Laufenlassen der ersten und zweiten Pumpen, wobei die Flüssigkeitsventile (16) geöffnet sind, bis einer der Wandler (14) den vorher festgelegten Ausstoß erreicht; und
Schließen des Flüssigkeitsventils (16), das zu der Pumpe gehört, welche den vorher festgelegten Ausstoß erreicht hat, und Weiterlaufenlassen der anderen der Pumpen, bis diese den vorher festgelegten Ausstoß erreicht hat; ferner umfassend die Schritte:
Schließen jedes der Flüssigkeitsventile (16), wenn die diesem zugehörige Pumpe die Umschaltung erreicht, um der Pumpe zu ermöglichen, jegliche Gase zu verdichten und ein der Pumpe zugehöriges Rückschlagventil formschlüssig zu schließen;
wenn die Pumpe blockiert, Öffnen des Flüssigkeitsventils (16); und
Außerachtlassen jeglichen Hubs und zugerechneten Flusses während des Zyklusabschnitts, wenn das Flüssigkeitsventil (16) geschlossen ist.

## Revendications

1. Procédé de distribution de matériaux à composants pluriels ayant au moins une première et une seconde partie devant être mélangées dans un rapport prédéterminé, en utilisant un appareil ayant une première et une seconde pompe alternative (12) reliées auxdites première et seconde parties, chacune desdites pompes étant équipée d'un capteur de déplacement (14) et d'une soupape à fluides (16) au niveau de la sortie de ladite pompe, le procédé comprenant les étapes de :
prédétermination de la sortie de chacun desdits capteurs (14), qui correspond à la résolution dudit capteur (14) et audit rapport prédéterminé ;
fonctionnement desdites première et seconde pompes équipées desdites soupapes à fluides (16) ouvertes jusqu'à ce que l'un desdits capteurs (14) atteigne ladite sortie prédéterminée ; et
fermeture de la soupape à fluides (16) associée à la pompe qui a atteint ladite sortie prédéterminée et continuer le fonctionnement de l'autre desdites pompes jusqu'à ce qu'elle ait atteint ladite sortie prédéterminée ; comprenant en outre les étapes de :
fermeture de chacune desdites soupapes à fluides (16) pendant que la pompe associée à celles-ci atteint un passage pour permettre à ladite pompe de comprimer n'importe quel gaz et de fermer positivement une vanne de non-retour associée à ladite pompe ;
lorsque ladite pompe cale, ouverture de la soupape à fluides (16) ; et
la mise de côté de tout écoulement de déplacement et imputé pendant la partie de cycle lorsque ladite soupape à fluides (16) est fermée.
